# EUROPEAN PATENT APPLICATION

(11) **EP 4 726 273 A1**
(43) Date of publication of application: **15.04.2026**
(21) Application number: 24819014.2
(22) Date of filing: 04.04.2024
(51) Int. Cl.: F24F 7/08, B01D 53/26, F28D 20/00

(54) **HEAT EXCHANGE TYPE VENTILATION DEVICE, AND TOTAL HEAT EXCHANGE VENTILATION SYSTEM**

(30) Priority: 07.06.2023 JP 2023093574
(71) Applicant: Sharp Kabushiki Kaisha, Sakai City, Osaka 590-8522 (JP)
(72) Inventor: KANNO, Toru, Sakai-ku, Sakai City Osaka 590-8522 (JP); IDE, Tetsuya, Sakai-ku, Sakai City Osaka 590-8522 (JP); HAMADA, Hiroka, Sakai-ku, Sakai City Osaka 590-8522 (JP); AOMORI, Shigeru, Sakai-ku, Sakai City Osaka 590-8522 (JP)
(74) Representative: Müller Hoffmann & Partner
(86) International application number: PCT/JP2024/013867
(87) International publication number: WO 2024/252775

(57) **Abstract**

A heat-exchange ventilation device of the present disclosure includes: a heat storage base material; and an air blower unit provided in one direction of the heat storage base material, and blows air either from outdoors to indoors or from the indoors to the outdoors by letting the air travel through the heat storage base material. The heat storage base material includes: a sensible heat unit; and a latent heat unit. The sensible heat unit and the latent heat unit are arranged continuously in series with respect to an air-blowing direction.

## Description

### Technical Field

The present disclosure relates to a heat-exchange ventilation device and a total heat-exchange ventilation system. The present application claims priority from Japanese Patent Application No. 2023-093574 filed on June 7, 2023, the content of which is hereby incorporated by reference into this application.

### Background Art

There are various heat-exchange ventilation devices known in the art.

For example, Patent Document 1 discloses a ventilation unit including: a heat storage element; an indoor hood; a dust filter; a ventilation fan; a sleeve; and an outdoor hood. The heat storage element is formed of ceramic and serves as a heat exchange element.

### Citation List

### Patent Literature

[Patent Document 1] Japanese Unexamined Patent Application Publication No. 2013-113463

### Summary of Invention

### Technical Problem

However, in the above document, the heat storage element is formed of simple ceramic. Hence, only a small amount of moisture is absorbed, and latent heat is not sufficiently exchanged.

Thus, in view of the above problem, the present disclosure provides a heat-exchange ventilation device and a total heat-exchange ventilation system capable of controlling humidity and exchanging heat efficiently in order to absorb a large amount of moisture.

### Solution to Problem

A heat-exchange ventilation device according to an aspect of the present disclosure includes: a heat storage base material; and an air blower unit provided in one direction of the heat storage base material, and blows air either from outdoors to indoors or from the indoors to the outdoors by letting the air travel through the heat storage base material. The heat storage base material includes: a latent heat unit; and a sensible heat unit. The sensible heat unit and the latent heat unit are arranged continuously in series with respect to an air-blowing direction.

A total heat-exchange ventilation system according to another embodiment of the present disclosure includes: the above heat-exchange ventilation device; and a space portion provided with the heat-exchange ventilation device. The heat-exchange ventilation device includes: a first heat-exchange ventilation device; and a second heat-exchange ventilation device. When the first heat-exchange ventilation device supplies air to the space portion, the second heat-exchange ventilation device exhausts air of the space portion, and the supply and the exhaustion of the air are switched in conjunction.

### Advantageous Effects of Invention

As described above, the present disclosure provides a heat-exchange ventilation device and a total heat-exchange ventilation system capable of controlling humidity and exchanging heat efficiently in order to absorb a large amount of moisture.

### Brief Description of Drawings

[FIG. 1] FIG. 1 is a cross-sectional view briefly illustrating a heat-exchange ventilation device according to a first embodiment.
[FIG. 2] FIG. 2 is a cross-sectional view schematically illustrating a humidity control material.
[FIG. 3] FIG. 3 is a view schematically illustrating the humidity control material.
[FIG. 4] FIG. 4 is a cross-sectional view of a sheet in which the humidity control material is dispersed in a binder.
[FIG. 5] FIG. 5 is a cross-sectional view schematically illustrating the humidity control material.
[FIG. 6] FIG. 6 is a graph showing a moisture absorption isotherm of sodium formate at 25 °C.
[FIG. 7] FIG. 7 is a hygrometric chart of a total heat exchange element carrying the humidity control material.
[FIG. 8] FIG. 8 is a hygrometric chart of the heat-exchange ventilation device according to a first embodiment.
[FIG. 9] FIG. 9 is a perspective view illustrating an exemplary shape of a heat storage base material.
[FIG. 10] FIG. 10 is a perspective view illustrating an exemplary shape of the heat storage base material.
[FIG. 11] FIG. 11 is a front elevation view illustrating an exemplary (internal) structure of the heat storage base material.
[FIG. 12] FIG. 12 is a front elevation view illustrating an exemplary (internal) structure of the heat storage base material.
[FIG. 13] FIG. 13 is a front elevation view illustrating an exemplary (internal) structure of the heat storage base material.
[FIG. 14] FIG. 14 is a cross-sectional view briefly illustrating a heat-exchange ventilation device according to a second embodiment.
[FIG. 15] FIG. 15 is a hygrometric chart of the heat-exchange ventilation device illustrated in FIG. 14.
[FIG. 16] FIG. 16 is a cross-sectional view illustrating a modification of the heat-exchange ventilation device according to the second embodiment.
[FIG. 17] FIG. 17 is a cross-sectional view illustrating another modification of the heat-exchange ventilation device according to the second embodiment.
[FIG. 18] FIG. 18 is a cross-sectional view illustrating another modification of the heat-exchange ventilation device according to the second embodiment.
[FIG. 19] FIG. 19 is a hygrometric chart of the heat-exchange ventilation device illustrated in FIG. 18.
[FIG. 20] FIG. 20 is a cross-sectional view illustrating another modification of the heat-exchange ventilation device according to the second embodiment.
[FIG. 21] FIG. 21 is a cross-sectional view taken along line XXI-XXI of FIG. 20.
[FIG. 22] FIG. 22 is a cross-sectional view taken along line XXII-XXII of FIG. 20.
[FIG. 23] FIG. 23 is a cross-sectional view taken along line XXIII-XXIII of FIG. 20.
[FIG. 24] FIG. 24 is a cross-sectional view briefly illustrating a heat-exchange ventilation device according to a third embodiment.
[FIG. 25] FIG. 25 is a cross-sectional view illustrating a modification of the heat-exchange ventilation device according to the third embodiment.
[FIG. 26] FIG. 26 is a hygrometric chart of the heat-exchange ventilation device illustrated in FIG. 24.
[FIG. 27] FIG. 27 is a schematic cross-sectional view briefly illustrating a heat-exchange ventilation device according to a fourth embodiment.
[FIG. 28] FIG. 28 is a schematic cross-sectional view briefly illustrating a heat-exchange ventilation device according to a fifth embodiment.
[FIG. 29] FIG. 29 is a hygrometric chart of the heat-exchange ventilation device illustrated in FIG. 28.
[FIG. 30] FIG. 30 is a side view briefly illustrating a total heat-exchange ventilation system including the heat-exchange ventilation device according to the present disclosure.

### Description of Embodiments

Described below will be preferable embodiments of the present disclosure, with reference to the drawings. Note that the embodiments to be described below do not unduly limit the details of the present disclosure recited in the claims. Not all of the configurations described in the embodiments are essential as solutions for the present disclosure. Note that, in the drawings, an X-axis, a Y-axis, and a Z-axis respectively represent an air-blowing direction, a width direction, and a height direction.

### Heat-Exchange Ventilation Device

### 1. First Embodiment

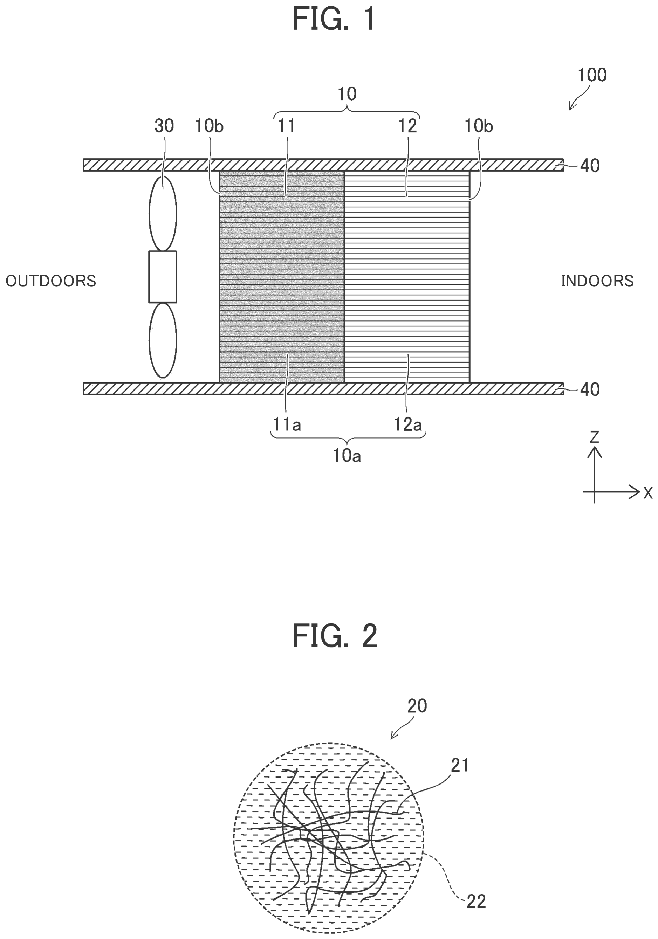

FIG. 1 is a cross-sectional view briefly illustrating a heat-exchange ventilation device 100 according to a first embodiment. As illustrated in FIG. 1, the heat-exchange ventilation device 100 according to the first embodiment includes: a heat storage base material 10; an air blower unit 30; and a tubular member 40.

The heat storage base material 10 includes: a sensible heat unit 11; and a latent heat unit 12. Note that the "sensible heat unit" means a heat exchanger mainly having a temperature exchange function, and the "latent heat unit" means a heat exchanger mainly having a humidity exchange function. The sensible heat unit 11 and the latent heat unit 12 are arranged continuously in series with respect to the air-blowing direction. The sensible heat unit 11 and the latent heat unit 12 may be either connected together as illustrated in FIG. 1 or spaced apart from each other with a clearance between the sensible heat unit 11 and the latent heat unit 12.

The air blower unit 30 is provided in one direction of the heat storage base material 10 and blows air either from outdoors to indoors or from the indoors to the outdoors by letting the air travel through an opening 10b of the heat storage base material 10. In FIG. 1, the air blower unit 30 is provided toward the outdoors. In the drawing, the air blower unit 30 blows the air either from an outdoor -X direction in an indoor +X direction, or from the indoor +X direction in the outdoor -X direction. The air blower unit 30 may be provided toward the indoors. The air blower unit 30 includes such components as a fan and a motor.

The tubular member 40 houses the heat storage base material 10 and the air blower unit 30. The tubular member 40 may be, for example, a tube or a pipe.

The heat storage base material 10 is provided with an air-blowing path 10a so that air can travel either from the outdoors to the indoors or from the indoors to the outdoors. Furthermore, the air-blowing path 10a includes: an air-blowing path 11a of the sensible heat unit 11; and an air-blowing path 12a of the latent heat unit 12.

The sensible heat unit 11 and the latent heat unit 12 of the heat storage base material 10 are preferably formed of a highly thermal-conductive metal such as aluminum, iron, or copper, so as to facilitate heat exchange. Otherwise, the sensible heat unit 11 and the latent heat unit 12 may be formed of a porous substance with a large surface area such as alumina, mullite, a ceramic such as cordierite, or nonwoven fabric fibers formed of paper or fibers. Furthermore, the sensible heat unit 11 and the latent heat unit 12 may be made of either the same material or different materials.

In order to allow the heat storage base material 10 to release and absorb heat to perform heat exchange and, further, to absorb and release water to adjust water contained in the air to be blown, the heat storage base material 10 includes the latent heat unit 12. Then, the latent heat unit 12 carries a humidity control material.

The humidity control material is capable of controlling humidity by absorbing or releasing water. The humidity control material will be described below.

FIG. 2 is a cross-sectional view schematically illustrating a humidity control material 20. The humidity control material illustrated in FIG. 2 includes: a water absorbing material 21 containing a resin and/or a clay mineral; and a humidity control liquid 22 that is a humidity control component capable of controlling humidity by absorbing or releasing water. The humidity control liquid 22 impregnates the water absorbing material 21. Depending on humidity of the environment in which the humidity control material 20 is placed, the humidity control material 20 either absorbs water contained in the air of the place or releases water contained in the humidity control material 20 to humidify the air with the water. Note that the humidity control liquid 22 may impregnate not only the water absorbing material 21 but also a carrier 23 that carries the humidity control material 20 (the water absorbing material 21). The carrier 23 will be described later. Furthermore, the water absorbing material can contain at least one selected from the group consisting of a water absorbing resin and a clay mineral.

The humidity control material 20 may be provided in the form of powder, particles, or a block. Alternatively, the humidity control material 20 may have a ventilating base material carry resin so that the resin in use may be efficiently brought into contact with the air.

The water absorbing material 21 is capable of holding the humidity control liquid 22. Because the water absorbing material 21 holds the humidity control liquid 22, the humidity control material 20 can have a relatively large surface area with respect to the volume. Hence, the humidity control material 20 can increase a speed of absorbing or releasing water. Thus, the humidity control material 20 can achieve a high humidity control speed.

The water absorbing material 21 is preferably a water absorbing resin (water absorbing particles or water absorbing powder). Such a feature allows the water absorbing material 21 to be suitably impregnated with the humidity control liquid 22, thereby further enhancing an advantageous effect of controlling humidity successfully. Specific examples of the water absorbing resin material preferably include an ionic resin or a non-ionic resin. Examples of the ionic resin include alkali metal salt of polyacrylic acid and starch-acrylate graft polymer. Specific examples of the alkali metal salt of polyacrylic acid include sodium polyacrylate. Examples of the non-ionic resin include a vinyl acetate copolymer, a maleic anhydride copolymer, polyvinyl alcohol, and polyalkylene oxide. More preferably, the metal salt component forms hydrate crystals in a predetermined humidity range to encourage quick absorption and desorption of moisture in a specific humidity range as a threshold value.

The humidity control liquid 22 preferably contains at least one selected from the group consisting of a salt (a deliquescent substance that deliquesces) and a polyhydric alcohol, and the selected one absorbs water in the air. Such a feature can further enhance the advantageous effect of controlling humidity.

Specific examples of the polyhydric alcohol include at least one selected from the group consisting of glycerin, propanediol, butanediol, pentanediol, trimethylolpropane, butanetriol, ethylene glycol, diethylene glycol, triethylene glycol, and lactic acid. In particular, the polyhydric alcohol to be suitably used has three or more hydroxyl groups such as glycerin. Note that the polyhydric alcohol may constitute a dimer or a polymer.

The deliquescent substance is classified into a salt and a water-soluble organic substance. Specific examples of the salt include metal salts such as sodium formate, potassium formate, ammonium formate, sodium acetate, potassium acetate, lithium acetate, ammonium acetate, sodium lactate, potassium lactate, sodium benzoate, potassium benzoate, sodium propionate, potassium propionate, calcium chloride, lithium chloride, magnesium chloride, calcium chloride, lithium chloride, potassium chloride, sodium chloride, zinc chloride, aluminum chloride, lithium bromide, calcium bromide, potassium bromide, sodium hydrate, sodium pyrrolidone carboxylate, potassium carbonate, calcium citrate, sodium citrate, potassium citrate, and lithium citrate. Among the salts, the deliquescent substance may contain one salt alone or two or more salts. Among the salts, preferable salts are sodium formate, potassium formate, sodium acetate, potassium acetate, and potassium carbonate because these salts absorb and release a large amount of water per weight in absorption and desorption of moisture. Specific examples of the water-soluble organic substance include: saccharides such as sucrose, pullulan, glucose, xylol, fructose, mannitol, and sorbitol; carboxylic acids such as citric acid; and amides such as urea.

The amount of the humidity control liquid 22 with respect to the water absorbing material 21 is preferably 1 part by weight or more and 1000 parts by weight or less per 100 parts by weight of the water absorbing material. Thanks to such a feature, the water absorbing material 21 and the humidity control liquid 22 are prepared in appropriate amounts, thereby further improving the humidity control capability successfully. Furthermore, the water absorbing material 21 is provided preferably in the form of powder or particles.

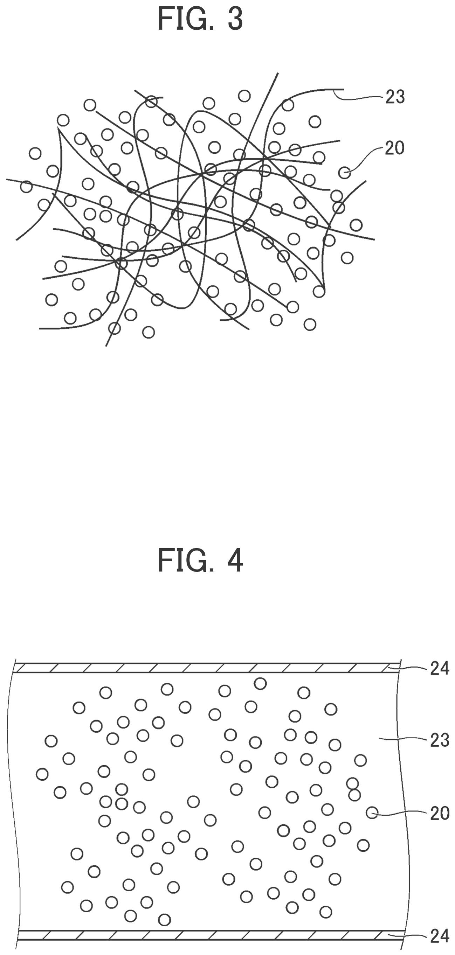

FIG. 3 is a view schematically illustrating the humidity control material 20. As illustrated in FIG. 3, the humidity control material 20 (the water absorbing material 21) may be carried by the carrier 23. Furthermore, the carrier 23 can be impregnated with water.

As to the heat-exchange ventilation device 100 according to the present disclosure, the humidity control material 20 described above is applied to the latent heat unit 12, or the latent heat unit 12 is immersed in a liquid containing the humidity control material 20. Thus, the humidity control material 20 is firmly attached to the latent heat unit 12. Furthermore, in forming the humidity control material 20, a water-absorbing resin is added to a humidity control liquid, and the mixture is stirred and swollen. Hence, the humidity control material 20 is prepared as a firmly-attaching viscos slurry. The slurry can be applied to, and impregnate, the latent heat unit 12 of the heat storage base material 10, dried, and fixed to the latent heat unit 12.

FIG. 4 schematically shows another form of the humidity control material 20. FIG. 4 is a cross-sectional view of a sheet having a water absorbent 24 including a binder (the carrier 23). In the binder, the humidity control material 20 is dispersed. As illustrated in FIG. 4, the humidity control material 20 (the water absorbing material 21) may be carried by the carrier 23. Furthermore, the water absorbent 24 may contain the water absorbing material 21. Furthermore, the carrier 23 can be impregnated with water. The latent heat unit 12 may be provided with a material containing the humidity control material 20 illustrated in FIG. 4.

Moreover, in selecting the carrier 23 carrying the humidity control material 20, the carrier 23 is preferably an optimum one depending on the usage. In a case where moisture is absorbed and desorbed desirably in large amount in order to control temperature, the carrier 23 is preferably formed of a material to humidify and hold the humidity control liquid 22. For example, the carrier 23 is formed of hydrophilic fibers such as a porous solid, a nonwoven fabric, and a woven fabric. Particularly preferable is a nonwoven fabric highly permeable to water vapor. Furthermore, the carrier 23 can contain a binder.

When used, the carrier 23 may be shaped into various shapes such as a sheet shape, a flat-plate shape, a pleated shape, and a honeycomb shape. For example, a sheet-shaped material is first shaped into a waveform (flute) with a corrugator. Then, with an adhesive, the sheet-shaped material is bonded to, and integrated with, a flat-plate liner formed of the same material as, or a different material from, a material of the sheet. Furthermore, the carrier 23 may be flexible. The carrier 23 may be alterable in shape. In other words, the carrier 23 can be held in any given shape (e.g., folded or curved).

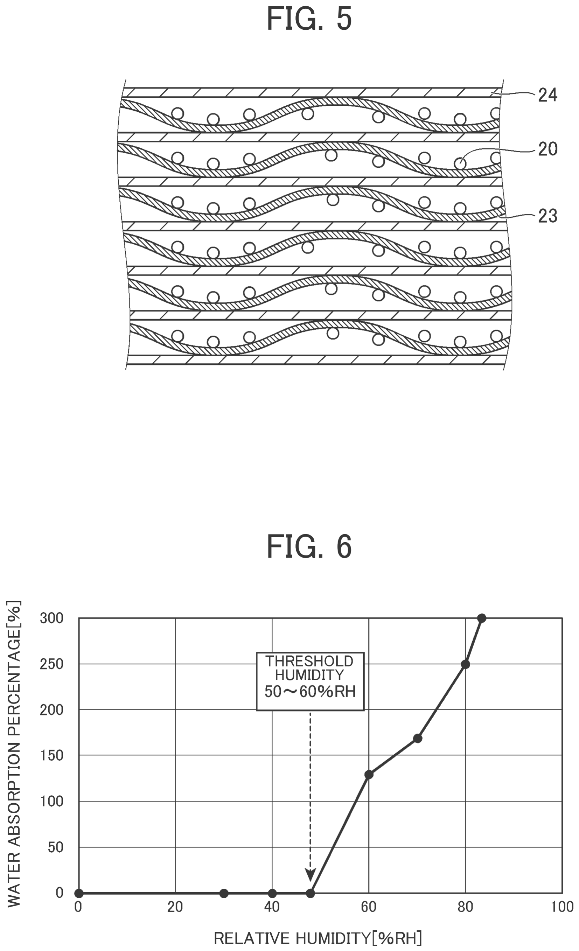

FIG. 5 is a cross-sectional view schematically illustrating the humidity control material 20. As illustrated in FIG. 5, the humidity control material 20 may be carried by the carrier 23, held in the water absorbent 24, and provided to the latent heat unit 12. Such a feature can further increase an area in contact with the air, thereby improving the humidity control capability.

The water absorbent 24 may contain the water absorbing material 21. Furthermore, the water absorbent 24 may be provided in the form of powder, granules, or a sheet.

In addition to the above examples, the humidity control material 20 may be such a material as the B-type silica gel and a polymer sorbent.

Furthermore, assuming that the humidity control material 20 contains the metal salt as a humidity control component, the humidity control material 20 may additionally include another component serving as an additive for adjusting crystallization threshold humidity. Examples of the other component include other metal salts, polyhydric alcohols, or materials to serve as core materials for hydrate crystals. Specific examples of each of the generating materials include carboxylic acids having two or more carboxyl groups and amides having two or more amide groups. The carboxylic acids may be the substances described above. When the humidity control material crystalizes in low humidity, the crystallization threshold humidity indicates a threshold value of the humidity causing the crystallization.

Note that the term "humidity control" means to control relative humidity to approximate to a predetermined humidity range. Specifically, for example, when a predetermined relative humidity is set to 50% RH, the humidity control material 20 takes up water (absorbs moisture) if the relative humidity is higher than 50% RH and releases water (desorbs moisture) if the relative humidity is lower than 50% RH. Usually, a predetermined relative humidity zone correlates with a material of, and an amount of water in, the humidity control material 20. Specifically, for example, a predetermined relative humidity zone correlates with a water content of the humidity control liquid 22.

FIG. 6 is a graph showing a moisture absorption isotherm of sodium formate at 25 °C. Sodium formate forms water molecules and rigid hydrate crystals at a relative humidity of approximately 50% RH or less. The hydrate crystals deliquescence and liquefies when the relative humidity reaches approximately 60% RH.

Hence, if the relative humidity of the ambient air is lower than the threshold humidity, the absorption of the moisture does not proceed more than required to form the water molecules and the hydrate crystals. If the relative humidity of the ambient air is higher than the threshold humidity, the absorption of the moisture rapidly proceeds and the water absorption rate rises.

Specifically, if the relative humidity of the ambient air is lower than approximately 50 to 60% RH, sodium formate does not proceed with moisture absorption more than required to form the hydrate crystals. If the relative humidity of the ambient air is higher than approximately 50 to 60% RH, sodium formate rapidly proceeds with moisture absorption and the water absorption rate rises.

As can be seen, heat is exchanged efficiently, using the latent heat unit 12 and the sensible heat unit 11 carrying the humidity control material 20 that absorbs and releases water.

Further described below will be the heat-exchange ventilation device 100 according to the first embodiment.

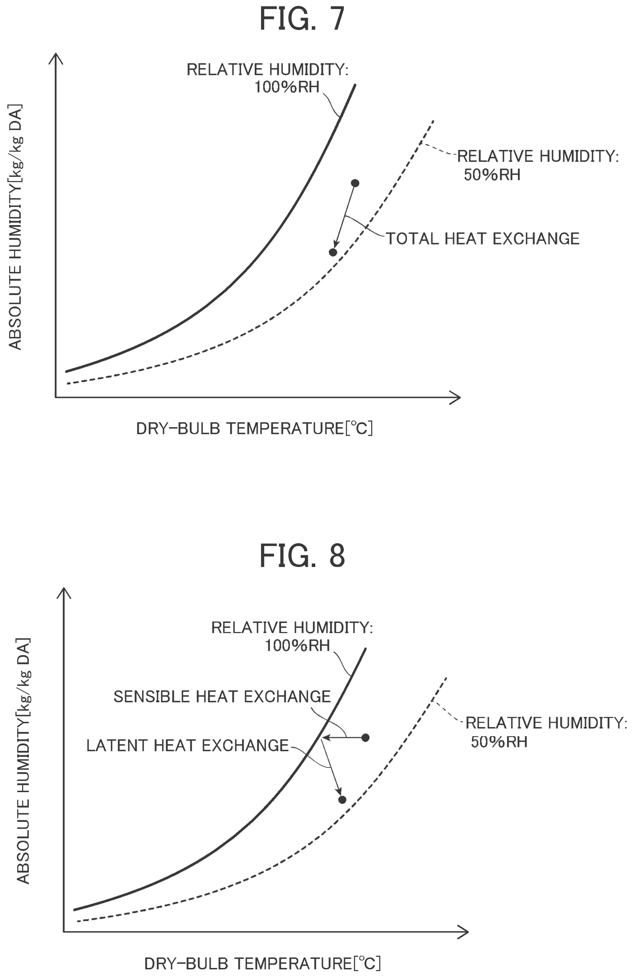

FIG. 7 is a hygrometric chart of a total heat exchange element carrying the humidity control material 20. FIG. 8 is a hygrometric chart of the heat-exchange ventilation device 100 according to the first embodiment. Here, the total heat exchange element is an element having both a sensible heat exchange function and a latent heat exchange function; whereas, the sensible heat unit and the latent heat unit are not clearly separated unlike the heat-exchange ventilation device 100 according to the first embodiment. Furthermore, the total heat exchange element has the sensible heat unit and the latent heat unit not arranged continuously in series with respect to the air-blowing direction unlike the heat-exchange ventilation device 100 according to the first embodiment. Here, for example, assumed is a case where heat is exchanged in the summer between outdoor air of high temperature and humidity and indoor air of low temperature and humidity.

As illustrated in FIG. 7, when the total heat exchange element carrying the humidity control material 20 controls the humidity from an initial relative humidity to a humidity of approximately 50% RH when the high temperature and humidity air is subjected to heat exchange, the relative humidity gradually decreases, and efficiency in exchanging humidity declines.

Whereas, as illustrated in FIG. 8, in the heat-exchange ventilation device 100 according to the first embodiment, the sensible heat unit 11 exchanges sensible heat of the high temperature and humidity air to cool the air to low temperature and high humidity. Then, the humidity control material 20 carried by the latent heat unit 121 absorbs water to warm the air to high temperature with low humidity.

As can be seen, the heat-exchange ventilation device 100 according to the first embodiment includes the sensible heat unit 11 and the latent heat unit 12. Such a feature raises the relative humidity of a boundary between the sensible heat unit 11 and the latent heat unit 12, and the humidity control material 20 carried by the latent heat unit 12 exhibits high efficiency in exchanging humidity, thereby successfully exchanging heat efficiently.

In the above description, assumed is heat exchange from high temperature and humidity to low temperature and humidity. A size of a surface area of each of the sensible heat unit 11 and the latent heat unit 12 and an amount and a material of each of the latent heat unit 12 and the humidity control material 20 are selectively determined to obtain desired temperature and desired humidity.

Furthermore, as illustrated in FIG. 8, in order to reduce the temperature and the humidity of the air, the sensible heat unit 11 is disposed preferably toward the outdoors and the latent heat unit 12 is disposed preferably toward the indoors. In other words, the sensible heat unit 11 is formed outside the heat storage base material 10 and provided toward the outdoors, and the latent heat unit 12 is provided toward the indoors.

Next, a shape of the heat storage base material 10 will be described.

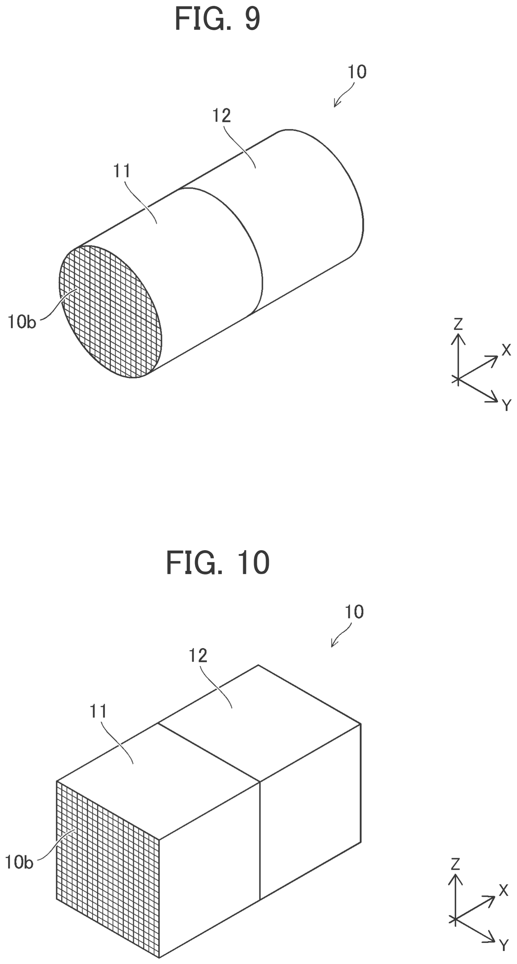

FIG. 9 is a perspective view illustrating an exemplary shape of the heat storage base material 10. FIG. 10 is a perspective view illustrating an exemplary shape of the heat storage base material 10. The heat storage base material 10 may be of a cylindrical type as illustrated in FIG. 9. Furthermore, the heat storage base material 10 may be of a prism type (a block type) as illustrated in FIG. 10. The cylindrical type exhibits high thermal resistance in the same direction in the plane of the circle; whereas, the prism type (the block type) exhibits high thermal resistance in a different direction in the plane of the square. When an axial fan and the heat storage base material 10 are combined together, the heat storage base material 10 is preferably cylindrical because the axial fan is often circular.

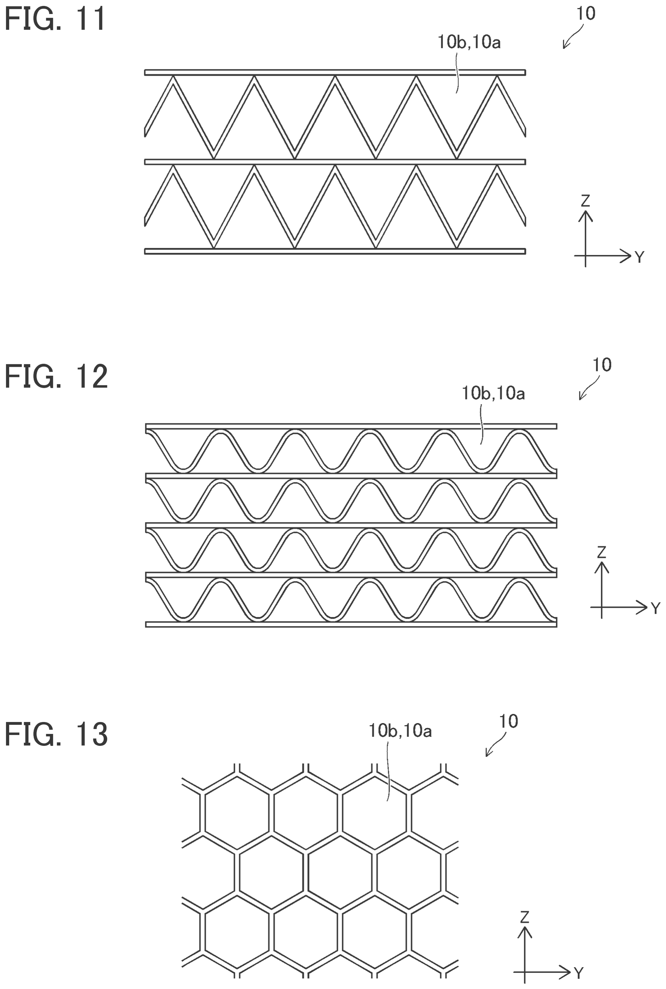

FIG. 11 is a front elevation view illustrating an exemplary (internal) structure of the heat storage base material 10. FIG. 11 is a front elevation view of the heat storage base material 10 illustrated in FIG. 1 and observed from toward +X or -X. The same applies to FIGS. 12 and 13 to be seen later. Furthermore, FIG. 12 is a front elevation view illustrating an exemplary (internal) structure of the heat storage base material 10. FIG. 13 is a front elevation view illustrating an exemplary (internal) structure of the heat storage base material 10.

As illustrated in FIGS. 11, 12, and 13, the heat storage base material 10 preferably has a pleated structure, a corrugated structure, or a honeycomb structure. Such a feature can increase the surface area of the heat storage base material 10 and efficiently exchange heat of the blowing air so that the air is cooled and dehumidified to desired temperature and humidity. Outdoor air or indoor air enters and exits through the opening 10b of the heat storage base material 10 and passes through the air-blowing path 10a.

Note that, in the heat storage base material 10, the sensible heat unit 11 and the latent heat unit 12 may be different in aperture ratio and aperture size.

As can be seen, the heat-exchange ventilation device 100 according to the first embodiment is capable of controlling humidity and exchanging heat efficiently.

### 2. Second Embodiment

Described next will be a heat-exchange ventilation device 200 according to a second embodiment.

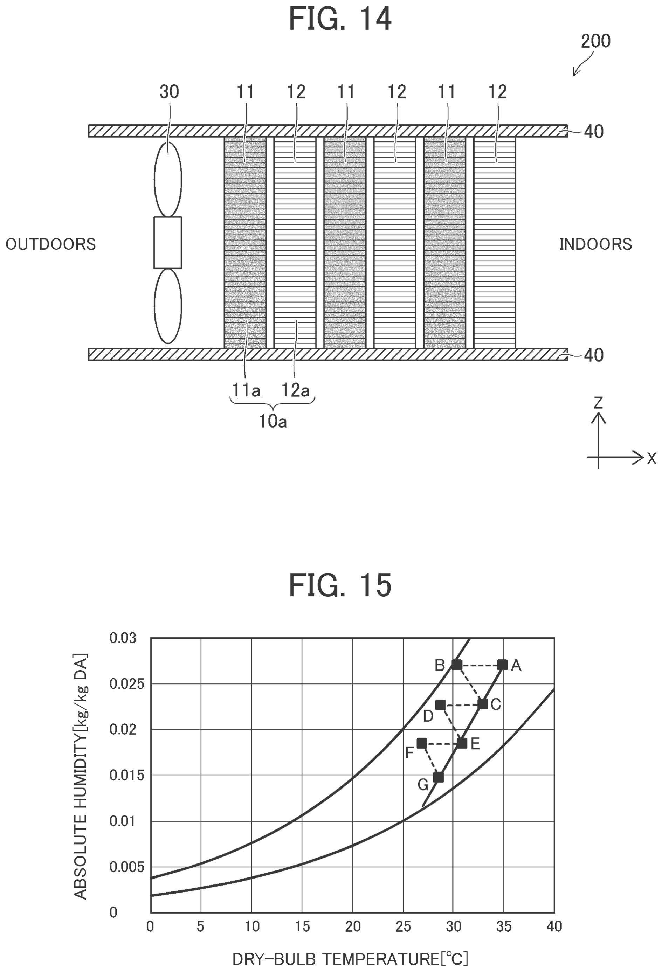

FIG. 14 is a cross-sectional view briefly illustrating a heat-exchange ventilation device 200 according to the second embodiment. As illustrated in FIG. 14, the heat-exchange ventilation device 200 according to the second embodiment includes a plurality of the sensible heat units 11 and a plurality of the latent heat units 12 arranged continuously.

When the high temperature and humidity air is cooled at once with the sensible heat unit 11, the relative humidity reaches 100% RH, and dew condensation might occur. Hence, the plurality of sensible heat units 11 and the plurality of latent heat units 12 are continuously arranged to decrease the temperature and humidity in small steps. Such a feature successfully exchanges heat more efficiently while reducing dew condensation.

FIG. 15 is a hygrometric chart of the heat-exchange ventilation device 200 illustrated in FIG. 14. Assumed are an outdoor temperature of 35 °C and an indoor temperature of 27 °C in the summer. First, the outdoor air of high temperature and humidity is cooled by a first sensible heat unit 11 to low temperature and high humidity. In FIG. 15, the outdoor air changes from a point A to a point B on the left. Here, the absolute humidity is left almost unchanged, and the temperature decreases. Hence, the relative humidity increases.

Next, a first latent heat unit 12 absorbs moisture of the outdoor air so that the outdoor air decreases in humidity. Simultaneously, the outdoor air generates heat by adsorption heat and increases in temperature. In FIG. 15, the outdoor air changes from the point B to a point C on the lower left. Here, the absolute humidity decreases while the temperature increases. Hence, the relative humidity decreases.

Furthermore, the relative humidity approximates to 50% RH. Hence the outdoor air is cooled by a second sensible heat unit 11 to low temperature and high humidity. In FIG. 15, the outdoor air changes from the point C to a point D on the left.

Moreover, a second latent heat unit 12 absorbs moisture of the outdoor air so that the outdoor air decreases in humidity.

Then, the outdoor air is repeatedly processed by the sensible heat units 11 and the latent heat units 12, and changes from a point E, to a point F, and to a point G. Thus, the outdoor air becomes low in temperature and humidity.

Such a feature repeatedly decreases the humidity and the temperature, thereby successfully exchanging heat more efficiently while reducing dew condensation. Furthermore, the feature repeatedly decreases the humidity and the temperature by the number of the plurality of sensible heat units 11 and the latent heat units 12 continuously arranged.

The heat-exchange ventilation device 200 according to the second embodiment achieves higher efficiency (a higher water absorption rate) as the relative humidity of the air to be processed is higher than 50% RH. Hence, the heat-exchange ventilation device 200 cools air, the humidity of which has decreased once, so that the air has high humidity. Such a feature successfully maintains the heat exchange efficiency high.

As shown in Table 1, when a summer outdoor-indoor condition marks an outdoor temperature of 35 °C, an outdoor humidity of 75% RH, an indoor temperature of 27 °C, and an indoor humidity of 52% RH, if heat is exchanged by a total heat exchanger having a sensible heat exchange efficiency and a latent heat exchange efficiency of 80%, the air passing through the sensible heat unit 11 and the latent heat unit 12 becomes an indoor air having a temperature of 28.6 °C and a humidity of 60% RH.

**[Table 1]**

| | Temperatur e [C°] | Relative Humidity [%RH] | Absolute Humidity [kg/kg] | Heat Exchange Efficiency [%] |
|---|---|---|---|---|
| Outdoors in Summer | 35 | 75.1 | 0.0270 | |
| | 28.6 | 60 | 0.0148 | 80% |
| Indoor in Summer | 27 | 52.4 | 0.0117 | 100% |

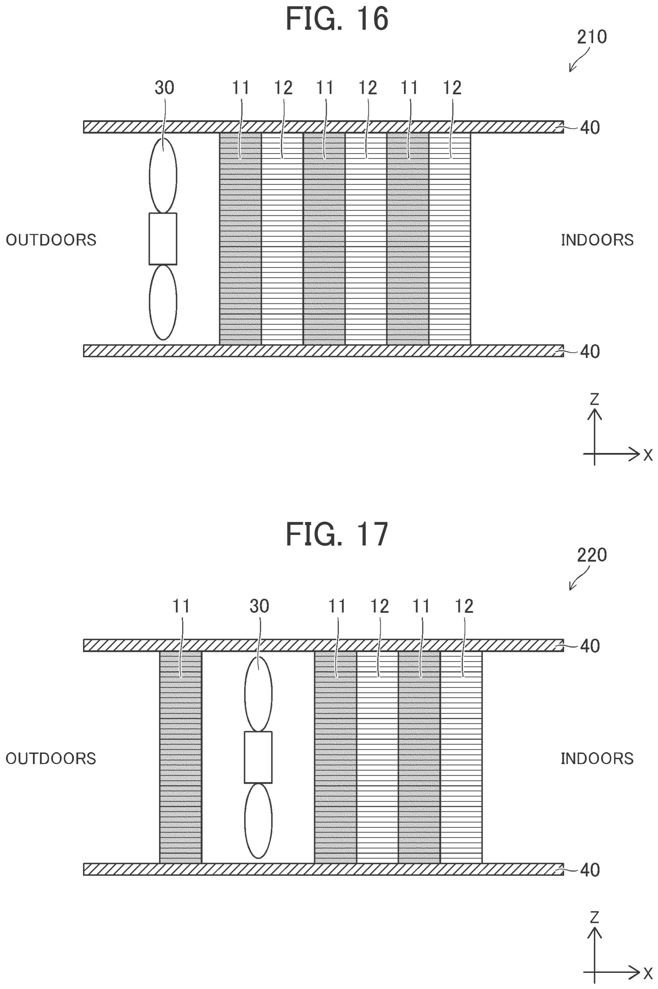

FIG. 16 is a cross-sectional view illustrating a modification of a heat-exchange ventilation device 210 according to the second embodiment. As illustrated in FIG. 16, the sensible heat units 11 and the latent heat units 12 may be in contact with each other. In an aspect illustrated in FIG. 14, clearances are found between the sensible heat units 11 and the latent heat units 12. However, in an aspect illustrated in FIG. 16, the sensible heat units 11 and the latent heat units 12 are in contact with each other without any clearances.

If the clearances are found between the sensible heat units 11 and the latent heat units 12, dew condensation might occur when the air is cooled at once. Furthermore, when the latent heat units 12 absorb water, the air might generate excessive heat and the relative humidity might decrease rapidly. Hence, when the heat storage base material 10 has the sensible heat units 11 and the sensible heat units 12 in contact with each other, heat can transfer within the heat storage base material 10 (between the sensible heat units 11 and the latent heat units 12) so that the temperature changes uniformly. Such a feature successfully exchanges heat more efficiently.

FIG. 17 is a cross-sectional view illustrating another modification of a heat-exchange ventilation device 220 according to the second embodiment. As illustrated in FIG. 17, the air blower unit 30 can be disposed between a sensible heat unit 11 and another sensible heat unit 11. Moreover, the air blower unit 30 can be disposed between a sensible heat unit 11 and a latent heat unit 12, between a latent heat unit 12 and another latent heat unit 12, and between a latent heat unit 12 and a sensible heat unit 11. In addition, the air blower unit 30 can be disposed inside the heat storage base material 10.

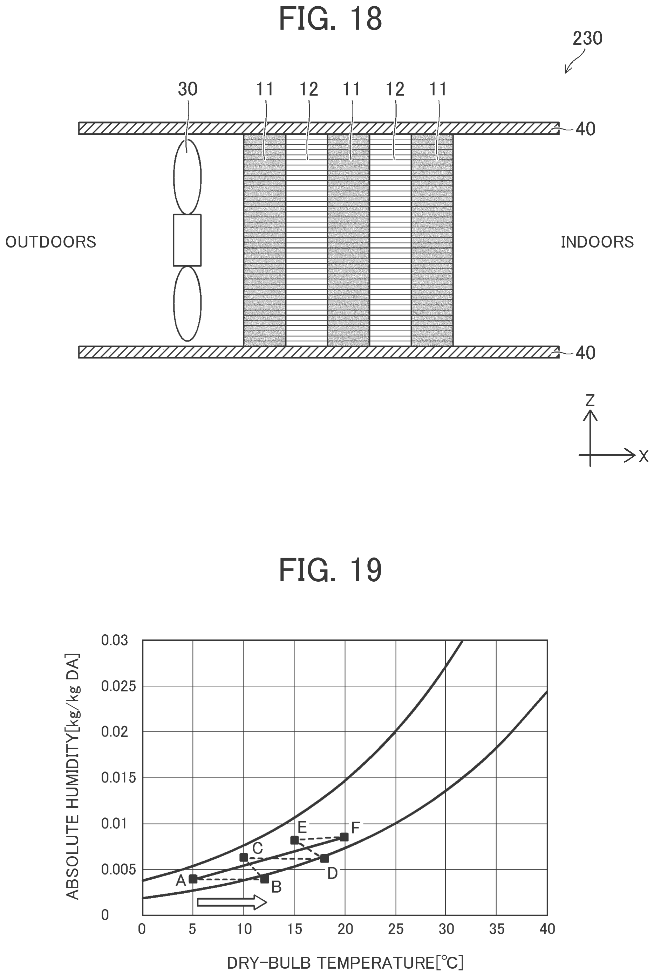

FIG. 18 is a cross-sectional view illustrating another modification of a heat-exchange ventilation device 230 according to the second embodiment. As illustrated in FIG. 18, the sensible heat units 11 may be arranged toward the indoors. In other words, outside the heat storage base material 10, the sensible heat units 11 are provided toward the indoors.

FIG. 19 is a hygrometric chart of the heat-exchange ventilation device 230 illustrated in FIG. 18. Assumed are an outdoor temperature of 5 °C, an outdoor humidity of 72% RH, an indoor temperature of 20 °C and an indoor humidity of 58.6% RH in the winter. A temperature difference is larger in the winter than in the summer. A humidity difference is smaller in the winter than in the summer.

FIG. 19 shows that, as seen in the summer, the outdoor air is once processed by the sensible heat unit 11 and heated. In FIG. 19, the outdoor air changes from a point A to a point B on the right. Here, the heated air decreases the relative humidity.

Next, the outside air is processed and humidified by a latent heat unit 12. In FIG. 19, the outdoor air changes from the point B to a point C on the upper left. Here, water evaporates from the latent heat unit 12, and the heat is drawn from the outdoor air. Hence, the outdoor air increases in humidity and simultaneously decreases in temperature.

Then, the outdoor air is repeatedly processed by the sensible heat units 11 and the latent heat units 12, and changes from the point C, to a point D, and to a point E. Then, the temperature of the outdoor air is increased again by the sensible heat unit 11 provided toward the indoors. As can be seen, the sensible heat unit 11 is disposed toward the indoors. Such a feature can increase indoor temperature, thereby successfully exchanging heat efficiently.

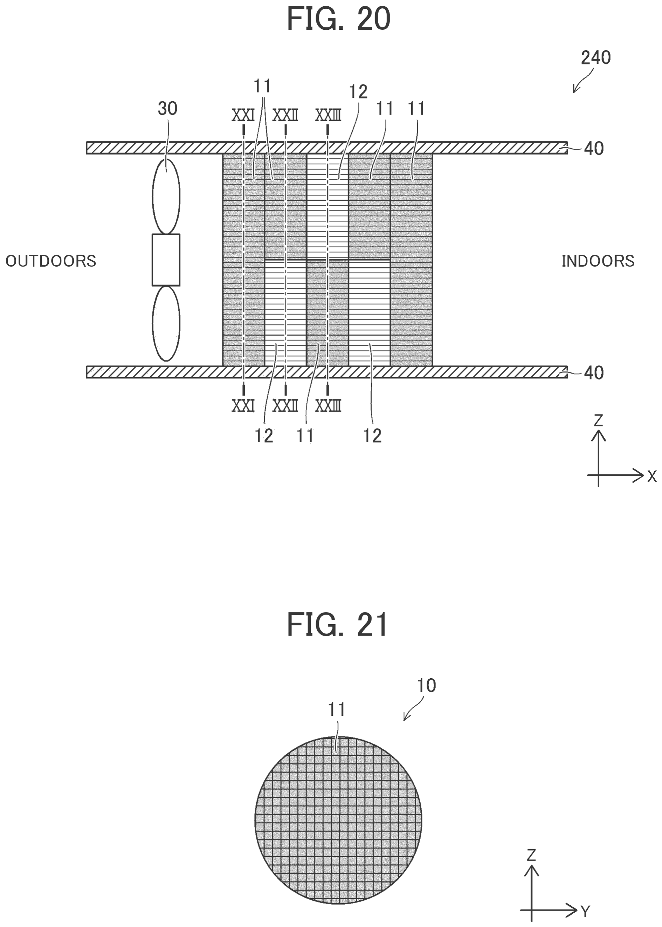

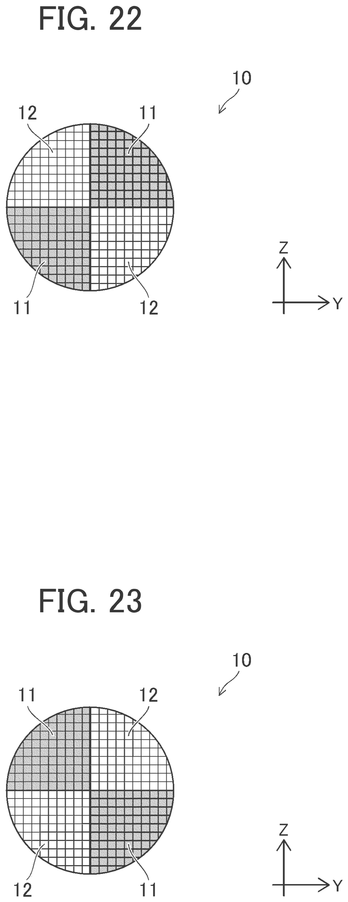

FIG. 20 is a cross-sectional view illustrating another modification of a heat-exchange ventilation device 240 according to the second embodiment. FIG. 21 is a cross-sectional view taken along line XXI-XXI of FIG. 20. FIG. 22 is a cross-sectional view taken along line XXII-XXII of FIG. 20. FIG. 23 is a cross-sectional view taken along line XXIII-XXIII of FIG. 20.

As illustrated in FIGS. 20, 21, 22, and 23, the sensible heat units 11 and the latent heat units 12 may be arranged in parallel with respect to the air-blowing direction. The sensible heat units 11 and the latent heat units 12 are provided in the Y-direction and the Z-direction. That is, in a cross-sectional view, an area for the sensible heat units 11 and an area for the latent heat units 12 are found. Furthermore, the sensible heat units 11 and the latent heat units 12 may be alternately arranged in series with respect to the air-blowing direction, and, simultaneously, arranged in parallel with respect to the air-blowing direction.

As can be seen, the heat-exchange ventilation devices according to the second embodiment are capable of controlling humidity and exchanging heat efficiently.

### 3. Third Embodiment

Described next will be a heat-exchange ventilation device 300 according to a third embodiment.

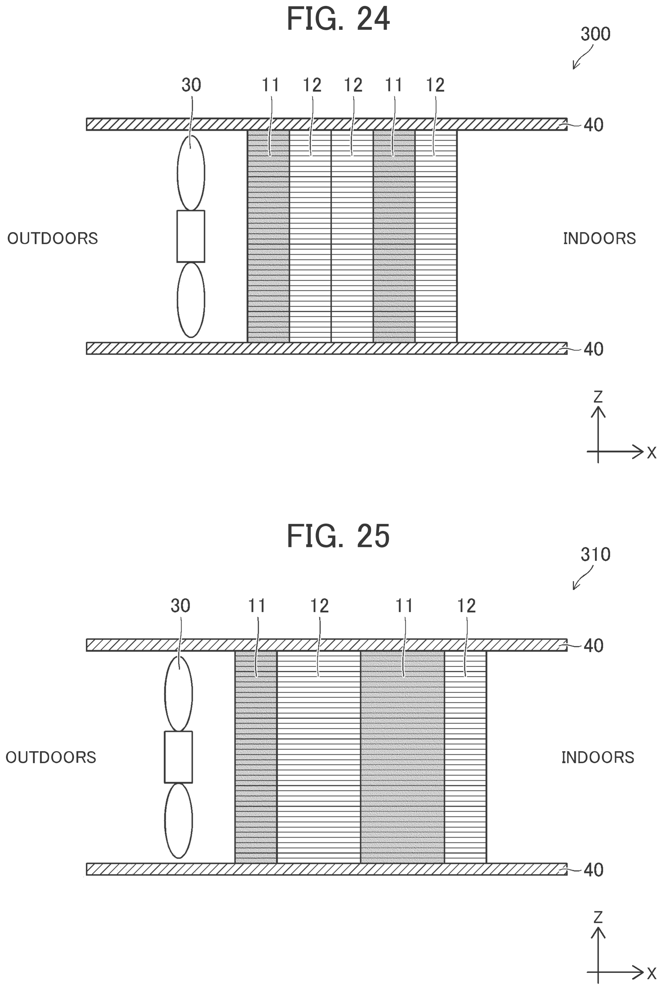

FIG. 24 is a cross-sectional view briefly illustrating a heat-exchange ventilation device 300 according to a third embodiment. As illustrated in FIG. 24, in the heat storage base material 10, the latent heat units 12 may be continuously arranged in series with respect to the air-blowing direction. In order to further manage a load of the latent heat, the heat-exchange ventilation device 300 is versatile in configuration such that the latent heat units 12 are provided in larger number.

Furthermore, in the heat storage base material 10, the sensible heat units 11 and the latent heat units 12 may be disposed either in the same number or in different numbers.

FIG. 25 is a cross-sectional view illustrating a modification of a heat-exchange ventilation device 310 according to the third embodiment. As illustrated in FIG. 25, the sensible heat units 11 and the latent heat units 12 may be different in thickness in the air-blowing direction. In order to manage a load of heat, the heat storage base material 10 can be made thick.

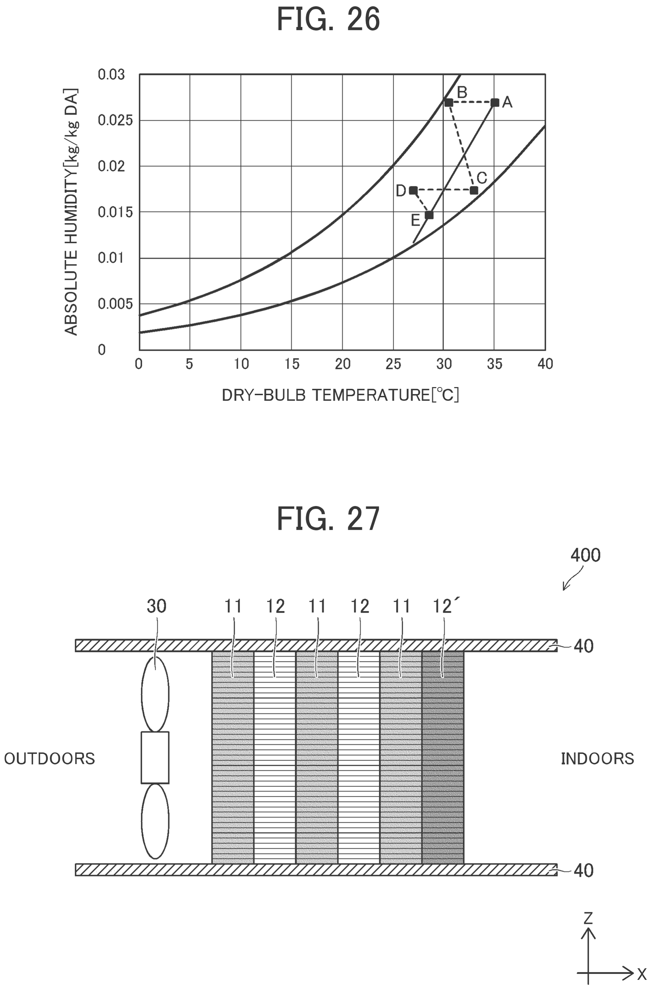

FIG. 26 is a hygrometric chart of the heat-exchange ventilation device 300 illustrated in FIG. 24. Assumed are an outdoor temperature of 35 °C, an outdoor humidity of 75% RH, an indoor temperature of 27 °C, and an indoor humidity of 52% RH in the summer.

First, the outdoor air is processed and cooled by a sensible heat unit 11. In FIG. 26, the outdoor air changes from a point A to a point B on the left. If the temperature falls excessively, dew condensation will occur. Hence, the outside air is cooled to approximately 30 °C. Here, a sensible heat unit 11 provided toward the outdoors does not have to perform the processing significantly.

Next, the outside air is processed by a latent heat unit 12 and the humidity of the outside air is decreased to approximately 55% RH. In FIG. 26, the outdoor air changes from the point B to a point C on the lower right.

First, the outdoor air is processed and cooled by a sensible heat unit 11, and then reduced in humidity by a latent heat unit 12. In FIG. 26, the outdoor air changes from the point C to a point D, and to a point E on the lower right.

As can be seen, the thicknesses and the numbers of the sensible heat units 11 and the latent heat units 12 are appropriately changed, so that a target temperature and a target humidity can be obtained.

As can be seen, the heat-exchange ventilation device according to the third embodiment is capable of controlling humidity and exchanging heat efficiently.

### 4. Fourth Embodiment

Described next will be a heat-exchange ventilation device 400 according to a fourth embodiment.

FIG. 27 is a cross-sectional view briefly illustrating a heat-exchange ventilation device 400 according to the fourth embodiment. As illustrated in FIG. 27, latent heat units 12 and 12' may carry humidity control materials 20 having different controlled relative humidities with respect to the air-blowing direction.

Furthermore, a controlled relative humidity of a humidity control material 20 carried by a latent heat unit 12 provided toward the indoors may be lower than a controlled relative humidity of a humidity control material 20 carried by the latent heat unit 12' provided toward the outdoors. For example, the humidity control material 20 carried by the latent heat unit 12 provided toward the outdoors has a threshold value of 50% RH, and the humidity control material 20 carried by the latent heat unit 12' provided toward the indoors has a threshold value of 40% RH. The preceding latent heat units 12 process the air in high humidity at 50% RH, and the succeeding latent heat unit 12' processes the air, with the absolute humidity decreasing, at a threshold value of 40% RH or lower. Such a feature successfully exchanges heat more efficiently.

In order to use humidity control materials having different threshold values, the salts contained in the humidity control materials 20 may be appropriately selected. For example, a metal salt such as a carboxylate or a carbonate may be appropriately prepared to obtain a desired threshold humidity.

As can be seen, the heat-exchange ventilation device according to the fourth embodiment is capable of controlling humidity and exchanging heat efficiently.

### 5. Fifth Embodiment

Described next will be a heat-exchange ventilation device 500 according to a fifth embodiment.

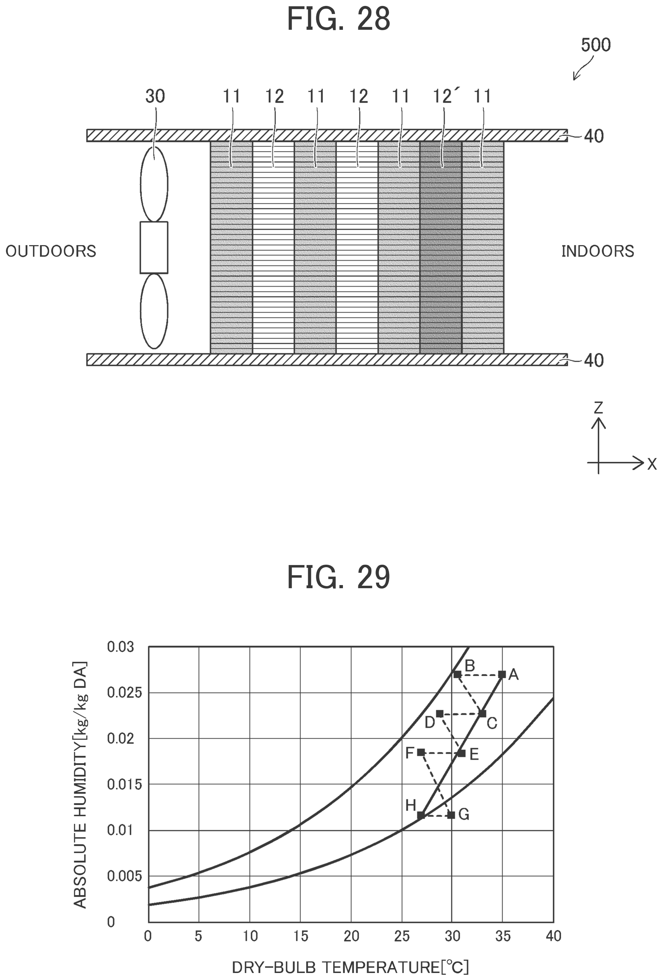

FIG. 28 is a cross-sectional view briefly illustrating a heat-exchange ventilation device 500 according to the fifth embodiment. As illustrated in FIG. 28, the sensible heat unit 11 includes a plurality of sensible heat units 11 provided toward the indoors and toward the outdoors. Hence, the air whose latent heat has been exchanged by the latent heat units 12 is processed by the sensible heat units 11 at the end. Such a feature can approximate heat exchange efficiency to 100%.

Furthermore, the latent heat units 12 may carry humidity control materials 20 having different controlled relative humidities with respect to the air-blowing direction.

FIG. 29 is a hygrometric chart of the heat-exchange ventilation device 500 illustrated in FIG. 28. Assumed are an outdoor temperature of 35 °C, an outdoor humidity of 75% RH, an indoor temperature of 27 °C, and an indoor humidity of 52% RH in the summer. As shown in FIG. 29, the outdoor air is cooled and dehumidified by sensible heat units 11 and latent heat units 12, and is changed from a point A to a point B, to a point C, to a point D, to a point E, and to a point F. Then, the air is processed by a latent heat unit 12 carrying a humidity control material 20 having a controlled relative humidity different from that of an outdoor side. Finally, the air is processed by a sensible heat unit 11 to have a temperature of 27 °C. and a humidity of 52.4% RH (changing to a point H).

It is difficult to decrease the absolute humidity alone, and when the absolute humidity falls, the heat of condensation generates heat and the temperature of the air rises. Especially, in the summer, the load of latent heat is greater than the load of sensible heat. The temperature of the air itself is approximately 8 °C, and it is difficult to cool the air to a certain temperature or below.

Hence, the sensible heat units 11 are disposed toward the indoors, and the air is processed by a sensible heat unit 11 at the end. Such a feature can approximate heat exchange efficiency to 100% at the end.

As can be seen, the heat-exchange ventilation device according to the fifth embodiment is capable of controlling humidity and exchanging heat efficiently.

### Total Heat-Exchange Ventilation System

Described next will be a total heat-exchange ventilation system 100.

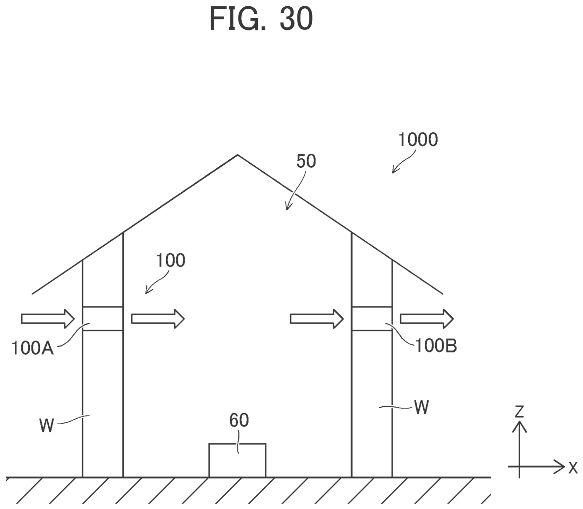

FIG. 30 is a side view briefly illustrating a total heat-exchange ventilation system 1000 including the heat-exchange ventilation device according to the present disclosure. As illustrated in FIG. 30, the heat-exchange ventilation device according to the present disclosure includes: a heat-exchange ventilation device described above; a space portion 50 provided with the heat-exchange ventilation device; and a control device 60.

The heat-exchange ventilation device may be embedded and installed in, for example, a wall of a house.

The total heat-exchange ventilation system 1000 may be provided with a plurality of heat-exchange ventilation devices. Suppose a case where the heat-exchange ventilation device includes at least: a first heat-exchange ventilation device 100A and a second heat-exchange ventilation device 100B. As illustrated in FIG. 30, when the first heat-exchange ventilation device 100A supplies air to the space portion 50, the second heat-exchange ventilation device 100B exhausts air of the space portion 50. Furthermore, after a predetermined time period, for example, several tens of seconds, has elapsed, the first heat-exchange ventilation device 100A exhausts the air of the space portion 50, and the second heat-exchange ventilation device 100B supplies air to the space portion 50. Then, at a predetermined time cycle, the first heat-exchange ventilation device 100A and the second heat-exchange ventilation device 100B switch in conjunction the supply and the exhaustion of the air. As can be seen, the total heat-exchange ventilation system 1000 according to the present disclosure can be of a time-sharing system in which the supply and the exhaustion of the air switch after a predetermined time period has elapsed. Such a feature makes it possible to exchange heat more efficiently and, simultaneously, to ventilate the space portion 50.

The supply and exhaustion of the air may be performed by the control device 60.

The space portion 50 is, for example, a space in a room, a car, or a train. Hence, the heat-exchange ventilation device according to the present disclosure can be used for either a house or a vehicle. In addition, the heat-exchange ventilation device can be installed not only in a house, a building, or a vehicle but also in a border such as a wall separating a space. Hence, the heat-exchange ventilation device can serve as the total heat-exchange ventilation system 1000.

As can be seen, the total heat-exchange ventilation system 1000 according to the present disclosure is capable of controlling humidity and exchanging heat efficiently.

The embodiments and examples of the present disclosure have been described in detail above. Those skilled in the art will readily appreciate that many modifications can be provided without substantially departing from the new matter and the advantageous effects of the present disclosure. Hence, all of such modifications are intended to be within the scope of the present disclosure.

For example, a term used at least once in the description or the drawings with a different term either in a broader or synonymous sense may be replaced with the different term anywhere in the description or the drawings. Furthermore, the configurations and the operations of the heat-exchange ventilation devices and the total heat-exchange ventilation system shall not be limited to those described in each of the embodiments and the examples of the present disclosure, and can be modified and implemented in various manners.

## Claims

1. A heat-exchange ventilation device, comprising:
a heat storage base material; and
an air blower unit provided in one direction of the heat storage base material, and configured to blow air either from outdoors to indoors or from the indoors to the outdoors by letting the air travel through the heat storage base material,
wherein the heat storage base material includes: a sensible heat unit; and a latent heat unit, and
the sensible heat unit and the latent heat unit are arranged continuously in series with respect to an air-blowing direction

2. The heat-exchange ventilation device according to claim 1,
wherein the latent heat unit carries a humidity control material.

3. The heat-exchange ventilation device according to claim 1,
wherein the sensible heat unit is disposed toward the outdoors.

4. The heat-exchange ventilation device according to claim 1,
wherein a plurality of the sensible heat units and a plurality of the latent heat units are arranged continuously.

5. The heat-exchange ventilation device according to claim 4,
wherein the sensible heat units are arranged toward the indoors.

6. The heat-exchange ventilation device according to claim 4,
wherein the sensible heat units and the latent heat units are arranged in parallel with respect to an air-blowing direction.

7. The heat-exchange ventilation device according to claim 1,
wherein the sensible heat unit and the latent heat unit are in contact with each other.

8. The heat-exchange ventilation device according to claim 1,
wherein the sensible heat unit and the latent heat unit are different in thickness in an air-blowing direction.

9. The heat-exchange ventilation device according to claim 1,
wherein the latent heat unit carries a humidity control material having a different controlled relative humidity with respect to an air-blowing direction.

10. The heat-exchange ventilation device according to claim 1,
wherein a controlled relative humidity of a humidity control material carried by the latent heat unit provided toward the indoors is lower than a controlled relative humidity of a humidity control material carried by the latent heat unit provided toward the outdoors.

11. The heat-exchange ventilation device according to claim 1,
wherein the sensible heat unit includes a plurality of sensible heat units provided toward the indoors and toward the outdoors.

12. The heat-exchange ventilation device according to claim 2,
wherein the humidity control material has: a water absorbent containing a water absorbing material; and a humidity control component contained in the water absorbent.

13. The heat-exchange ventilation device according to claim 12,
wherein the water absorbing material is at least one selected from the group consisting of a water absorbing resin and a clay mineral.

14. The heat-exchange ventilation device according to claim 12,
wherein the humidity control component contains at least one selected from the group consisting of a polyhydric alcohol and a salt.

15. The heat-exchange ventilation device according to claim 14,
wherein the salt is a metal salt.

16. The heat-exchange ventilation device according to claim 14,
wherein the salt is a carboxylate.

17. The heat-exchange ventilation device according to claim 1,
wherein the heat storage base material has a pleated structure, a corrugated structure, or a honeycomb structure.

18. The heat-exchange ventilation device according to claim 1,
wherein the heat-exchange ventilation device is used for either a house or a vehicle.

19. A total heat-exchange ventilation system, comprising:
the heat-exchange ventilation device according to any one of claims 1 to 18; and
a space portion provided with the heat-exchange ventilation device,
wherein the heat-exchange ventilation device includes: a first heat-exchange ventilation device; and a second heat-exchange ventilation device, and
when the first heat-exchange ventilation device supplies air to the space portion, the second heat-exchange ventilation device exhausts air of the space portion, and the supply and the exhaustion of the air are switched in conjunction.
